## Europäisches Patentamt
## European Patent Office
## Office européen des brevets

(11) Veröffentlichungsnummer: **0 131 935**

**A1**

(12) **EUROPÄISCHE PATENTANMELDUNG**

(21) Anmeldenummer: **84108253.0**

(22) Anmeldetag: **13.07.84**

(51) Int. Cl.⁴: **A 47 J 31/057**
**A 47 J 31/20**

(30) Priorität: **16.07.83 DE 8320540 U**
**16.12.83 DE 3345501**

(43) Veröffentlichungstag der Anmeldung:
**23.01.85 Patentblatt 85/4**

(84) Benannte Vertragsstaaten:
**AT BE CH DE FR GB IT LI LU NL SE**

(71) Anmelder: **WIGO electric GmbH**
**Lupfenstrasse 74**
**D-7730 Villingen-Schwenningen(DE)**

(72) Erfinder: **Fischer, Kurt**
**Scheffelstrasse 26a**
**D-7737 Bad Dürrheim(DE)**

(74) Vertreter: **Patentanwälte Dipl.-Ing. W. Scherrmann**
**Dr.-Ing. R. Rüger**
**Webergasse 3 Postfach 348**
**D-7300 Esslingen (Neckar)(DE)**

(54) Verfahren und Vorrichtung zum Herstellen eines Aufgusses von Tee oder Kaffee.

(57) Bei einem Verfahren zum Herstellen eines Aufgusses von Tee oder Kaffe wird zunächst eine vorbestimmte Menge Brühgut bildende Teeblätter oder gemahlene Kaffeebohnen in einem Brühgefäß (2) eingebracht. Dann wird Brühwasser in das Brühgefäß (2) eingefüllt und nach Ablauf einer vorbestimmten Zeitspanne der entstandene Aufguß von dem Brühgut getrennt. Um auch bei langsamer Brühwasserzugabe eine genaue Brühzeit einhalten zu können, wird das Brühgut in einem vorbestimmten Abstand über dem Boden (3) des Brühgefäßes (2) flächenförmig verteilt angeordnet und das Brühwasser in den Raum unterhalb des Brühgutes so lange eingefüllt, bis das Brühgut vollständig in dem von unten her ansteigenden Brühwasser untergetaucht ist.

./...

EP 0 131 935 A1

*Fig. 1*

0131935

- 1 -

Verfahren und Vorrichtung zum Herstellen eines Aufgusses von Tee oder Kaffee

Die Erfindung geht aus von einem Verfahren zum Herstellen eines Aufgusses von Tee oder Kaffee, bei dem zunächst eine vorbestimmte Menge Brühgut bildende Teeblätter oder gemahlene Kaffeebohnen in ein Brühgefäß eingebracht, dann Brühwasser in das Brühgefäß eingeleitet und nach Ablauf einer vorbestimmten Zeitspanne der entstandene Aufguß von dem Brühgut getrennt wird. Ferner betrifft die Erfindung eine Vorrichtung zur Durchführung dieses Verfahrens mit einem das Brühwasser aufnehmenden Behälter sowie einer Einrichtung zum Aufnehmen des Brühgutes.

Beim Herstellen eines Aufgusses von Tee oder Kaffee spielt neben der Temperatur des Brühwassers die Kontaktzeit zwischen dem Brühwasser und dem Brühgut eine entscheidende Rolle und beeinflußt wesentlich den Geschmack und die Qualität des entstandenen Getränkes. Insbesondere beim Aufbrühen von Tee hat die Zeit, in der die Teeblätter mit dem Brühwasser in Kontakt stehen, einen sehr großen Einfluß insofern nämlich, als bei kurzer Kontaktzeit ein anregender Tee entsteht, während bei langer Kontaktzeit weitere Stoffe aus den Teeblättern extrahiert werden, die eine beruhigende Wirkung auslösen.

Zur automatischen Herstellung von Teeaufgußgetränken wurden bislang die üblichen Haushaltskaffeemaschinen verwendet, bei denen in den Filter anstelle des Kaffeemehls Teeblätter eingegeben wurden. Bei diesem Verfahren ist offensichtlich die Kontaktzeit zwischen dem Brühwasser und den Teeblättern praktisch ausschließlich von der Menge des Brühwassers abhängig, das aus dem Überlaufrohr austretend, durch die Teeblätter hindurch in das Auffanggefäß läuft. Wenn dabei die Brühwassermenge so klein ist, daß sie innerhalb von drei Minuten aufgeheizt werden kann, entsteht immer ein anregender Tee, während bei größeren Mengen, bei denen das Aufheizen des Brühwassers und damit auch der Durchlaufvorgang länger als drei Minuten benötigt, grundsätzlich ein beruhigender Tee entsteht. Mit kleinen Brühwassermengen läßt sich überhaupt kein brauchbarer Teeaufguß herstellen, weil die Kontaktzeit zwischen den Teeblättern und dem heißen Brühwasser einfach zu kurz ist.

Grundsätzlich tritt ein ähnliches Phänomen auch beim Herstellen von Kaffeeaufgüssen auf, ist jedoch hier nicht so ausgeprägt wie beim Tee, weshalb sich auf der Basis von Haushaltskaffeemaschinen arbeitende Teemaschinen bislang am Markt nicht durchsetzen konnten.

Aufgabe der Erfindung ist es deshalb, ein Verfahren und eine Vorrichtung zum Herstellen eines Aufgusses von Tee oder Kaffee zu schaffen, bei dem die Kontaktzeit zwischen dem Brühgut, das von den Teeblättern oder dem Kaffeemehl gebildet ist und dem Brühwasser im wesentlichen genau eingehalten werden kann.

Zur Lösung dieser Aufgabe ist das erfindungsgemäße Verfahren durch die Merkmale des Hauptanspruches gekennzeichnet.

Dadurch, daß das erhitzte Brühwasser in den Raum unterhalb des Brühgutes eingegeben wird, kommt ein Kontakt zwischen dem Brühwasser und dem Brühgut erst nach einer bestimmten Zeit zustande, womit sich die Kontaktzeit auf die Zeitspanne verkürzt, in der das restliche Brühwasser aufgeheizt wird, das das Brühgut in dem Brühwasser untertauchen läßt, denn während der Zeit, während der der Raum unterhalb des Brühgutes gefüllt wird, tritt noch keine Extraktion des Brühgutes auf. Die Kontaktzeit ist somit im wesentlichen unabhängig von der Zeit, die benötigt wird, um eine allmählich erzeugte Brühwassermenge zuzugeben, die kontinuierlich entsteht.

Die flächenförmige Verteilung des Brühgutes verringert die Brühwassermenge, die erforderlich ist, um das gesamte Brühgut untertauchen zu lassen.

Bei dem Verfahren wird das Abtrennen des fertigen Aufgusses von dem Brühgut sehr einfach, wenn der Aufguß aus dem Raum unterhalb des Brühgutes abgezogen oder abgelassen wird.

Falls das Brühgut zum Verklumpen oder zum Aufschwimmen zufolge schlechter Netzeigenschaften im trockenen Zustand neigt, ist es günstig, wenn das Brühgut flächig unterstützt und gegen Aufschwimmen gesichert ist, damit es das ansteigende Brühwasser nicht nach oben tragen kann.

Falls stark wechselnde Brühwassermengen zu verarbeiten sind und die Gesamtherstellungszeit für den Aufguß einschließlich der Zeit, die zum Erwärmen des Brühwassers benötigt wird, kurz gehalten werden soll, kann der Abstand des Brühgutes von dem Boden des Brühgefäßes an die Anstiegsgeschwindigkeit des Brühwassers in dem Brühbehälter sowie die Menge des Brühwassers angepaßt werden, derart, daß unabhängig von der Anstiegsgeschwindigkeit und der Menge des Brühwassers eine im wesentlichen konstante Einwirkzeit des Brühwassers auf das Brühgut zustandekommt, um so ein Einbeziehen der Zeit für das Erhitzen des restlichen Brühwassers in die Kontaktzeit zu ermöglichen.

Eine sehr einfache Vorrichtung zur Lösung der Aufgabe und der Durchführung des Verfahrens verwendet einen in einem Brühwasserbehälter vorgesehenen Rost, auf den das Brühgut aufzugeben ist und eine in den Raum unterhalb des Rostes in den Brühwasserbehälter mündende Leitung für die Zufuhr des Brühwassers.

Eine konstruktiv sehr einfache Lösung besteht darin, die Leitung als ein durch den Rost hindurch- bzw. daran vorbeigeführtes Steigrohr auszubilden, das gegen den Rost abgedichtet ist.

Zur Herstellung von Auszugsgetränken unterschiedlicher Menge bei gleicher Kontaktzeit ist der Rost in dem Brühwasserbehälter höhenverstellbar angeordnet.

Ein Einbringen von Brühgut in den Raum unterhalb des Rostes wird verhindert, wenn der Rost allseitig bis an die Innenwand des Brühwasserbehälters im wesentlichen gegen den Durchtritt von Brühgut abgedichtet heranreicht. Hierdurch wird auch ein Mitreißen von Brühgut beim Ablassen des Aufgusses aus dem Brühwasserbehälter verhindert. Dabei ist es zweckmäßig,

- 5 -

gleichzeitig auch den Rost gegen das Steigrohr gegen
den Durchtritt von Brühgut abzudichten, falls das
Steigrohr durch den Rost oder an diesem vorbeiführt.

Die Handhabung und die Herstellung vereinfachen
sich, wenn der Brühwasserbehälter einen abnehmbaren
Deckel aufweist, mit dem das Steigrohr verbunden
ist, weil so ohne weiteres das Steigrohr sich von
dem Brühwasserbehälter trennen läßt bzw. keine Vorsprünge aus der Wandung des Brühwasserbehälters nach
innen oder nach außen vorstehen. Zweckmäßigerweise
wird bei diesem Ausführungsbeispiel der Rost an dem
Steigrohr höhenverstellbar gehalten, wodurch eine
einfache Entnahme und Verstellbarkeit bei abgenommenem Deckel erreicht werden kann.

Ein Aufschwimmen des Brühgutes bei ansteigendem Brühwasser wird mit Sicherheit verhindert, wenn der Rost
den Boden eines das Brühgut aufnehmenden flachen
Brühgutbehälters mit zumindest bereichsweise wasserdurchlässiger Oberseite bildet, womit sich auch die
Reinigung vereinfacht, denn das Brühgut bleibt ständig in dem Brühgutbehälter.

Der Brühgutbehälter kann hierbei entweder eine verschließbare Einfüllöffnung aufweisen oder er kann
eine seitliche Öffnung enthalten, in der eine in das
Innere des Brühgutbehälters führende herausziehbare
Schublade mit wasserdurchlässigem Boden für das
Brühgut sitzt.

Wie bereits erwähnt, vereinfacht sich die Entnahme
des fertigen Aufgußgetränkes, wenn der Brühwasserbehälter einen in den Raum unterhalb des Rostes

- 6 -

mündenden Auslaß aufweist, der durch ein Ventil wahlweise absperrbar ist.

Ein selbsttätig ablaufender Brühvorgang kann erreicht werden, wenn dem Ventil ein Zeitschalter zugeordnet ist, durch den nach Ablauf einer gegebenenfalls einstellbaren Zeitspanne das Ventil im Öffnungssinne ansteuerbar ist.

Bequem zu handhaben wird der Brühvorgang, wenn der Brühwasserbehälter lösbar in einem Gerät zur Brühwassererzeugung angeordnet ist, das in einem Gehäuse einen Kaltwasserbehälter sowie einen an einen Auslauf des Kaltwasserbehälters angeschlossenen Durchlauferhitzer enthält, dessen Ausgangsseite an ein über dem Steigrohr mündendes Überlaufrohr angeschlossen ist, wobei das Gerät zur Brühwassererzeugung außerdem ein entnehmbares Auffanggefäß zur Aufnahme des fertigen Aufgusses enthält, das sich unterhalb des Brühwasserbehälters befindet. Wie Messungen gezeigt haben, kann mit einer solchen Anordnung eine höhere Brühwassertemperatur in dem Brühwasserbehälter erzeugt werden, als wenn das Brühwasser separat in einem Behälter vollständig aufgeheizt wird und in einem großen Schwall in den Brühwasserbehälter eingefüllt wird.

Eine zweckmäßiger Weiterbildungen fähige Anordnung sieht vor, den Brühwasserbehälter auf einem Träger des Gerätes zur Brühwassererzeugung aufzusetzen, unter dem sich das Auffanggefäß befindet. Hierdurch ist es nämlich möglich, das Ventilverschlußglied für das Ventil des Brühwasserbehälters in dem Träger zu lagern und mit dem in dem Gerät zur Brühwassererzeugung angeordneten Zeitschalter zusammenwirken zu lassen, während der Brühwasserbehälter selbst
keine wasserempfindlichen Teile enthält und sich
damit ohne weiteres beispielsweise in einer Geschirrspülmaschine reinigen läßt.

Wenn das Ventilverschlußglied auf einem Arm eines
in dem Träger gelagerten zweiarmigen Hebels sitzt,
dessen anderer Arm eine die Bewegung des Hebels
steuernde Nockenbahn des Zeitschalters abfühlt,
kann der Zeitschalter verhältnismäßig freizügig
in dem Gerät angeordnet werden.

Falls das Eigengewicht des nahzu leeren Brühwasserbehälters nicht ausreicht, um eine befriedigende
Dichtwirkung zwischen dem Ventilsitz an dem Brühwasserbehälter und dem in dem Träger gelagerten
Ventilverschlußglied zustandekommen zu lassen,
ist vorteilhafterweise der Brühwasserbehälter lösbar
auf dem Träger arretierbar. Diese Arretierung des
Brühwasserbehälters kann durch das mit dem Deckel
in Eingriff stehende Überlaufrohr erreicht werden,
das um eine vertikale Drehachse schwenkbar an dem
Gehäuse des Gerätes zur Brühwassererzeugung gehaltert
ist und so zum Zwecke des Entnehmens des Brühwasserbehälters lediglich zur Seite gedreht zu werden
braucht.

In der Zeichnung ist ein Ausführungsbeispiel des Gegenstandes der Erfindung dargestellt. Es zeigen:

Fig. 1 eine Vorrichtung zum Herstellen eines Aufgusses von Tee oder Kaffee gemäß der Erfindung in Verbindung mit einem Gerät zur
Erzeugung des Brühwassers, teilweise längsgeschnitten in einer Seitenansicht,

Fig. 2 die Vorrichtung nach Fig. 1, geschnitten entlang der Linie II-II nach Fig. 1,

Fig. 3 den Brühgutbehälter der Vorrichtung nach Fig. 1 in einer perspektivischen Darstellung mit teilweise aufgebrochener Oberseite,

Fig. 4 das Ventil sowie das Ventilverschlußglied für die Vorrichtung nach Fig. 1 in geöffneter Stellung in einer ähnlichen Darstellung wie in Fig. 1,

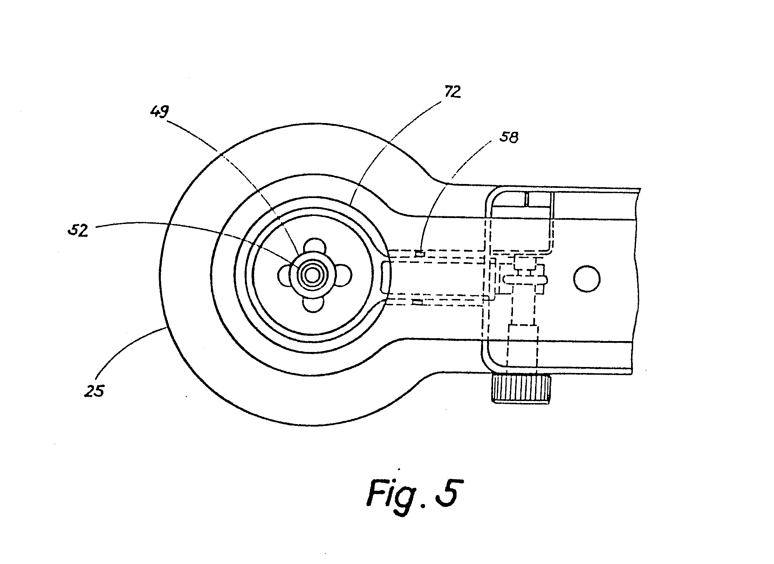

Fig. 5 den Träger für den Brühwasserbehälter nach Fig. 1 in einer Draufsicht,

Fig. 6 einen Schnitt durch das Gerät zur Herstellung des Brühwassers entlang einer Linie VI-VI nach Fig. 4 und

Fig. 7 bis 9 die Einstellung des Brühgutbehälters und des Zeitschalters für unterschiedliche Brühwassermengen und unterschiedliche Kontaktzeiten zwischen Brühwasser und Brühgut.

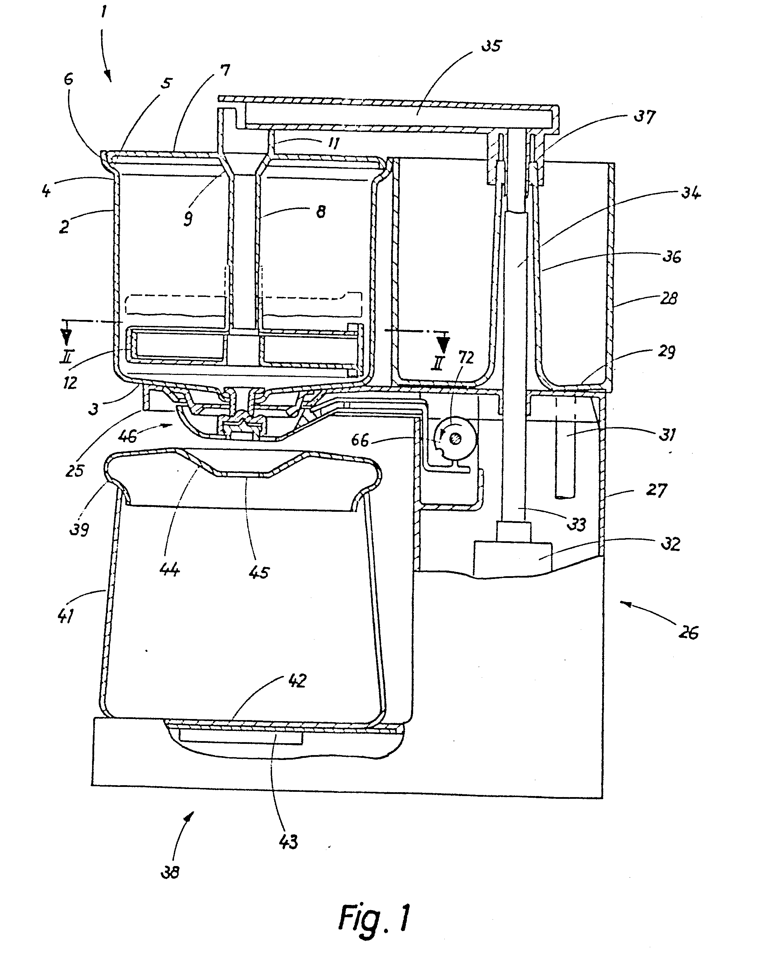

Fig. 1 zeigt eine Vorrichtung 1 zum Bereiten eines
Aufgusses von Teeblättern oder Kaffeemehl mit einem
kreiszylindrischen oben offenen Brühwasserbehälter 2,
dessen Boden 3 leicht kegelförmig ausgebildet ist.
Der dünnwandige Brühwasserbehälter 2 besteht aus
einem heißwasserfesten nahrungsmittelechten Material,
beispielsweise Edelstahl, Aluminium, Glas oder einem
entsprechenden Kunststoff und enthält im Bereich
seiner oberen Öffnung 4 eine radial nach außen ragende Schulter 5, an die ein nach oben ragender
Rand 6 angeformt ist. Auf der Schulter 5 liegt ein
Deckel 7 auf, an den mittig ein Steigrohr 8 angeformt ist, das bei aufgesetztem Deckel 7 koaxial
zu dem Behälter 2 verläuft und sich in Richtung auf
den Boden 3 erstreckt. Das Steigrohr 8 ist in seinem oberen Bereich bei 9 trichterartig erweitert
und steht mit einem Rohrabschnitt 11 über die Oberseite des Deckels 7 hinaus. Das Steigrohr 8 und
der Deckel 7 können aus den gleichen Materialien
hergestellt sein wie der Brühwasserbehälter 2.

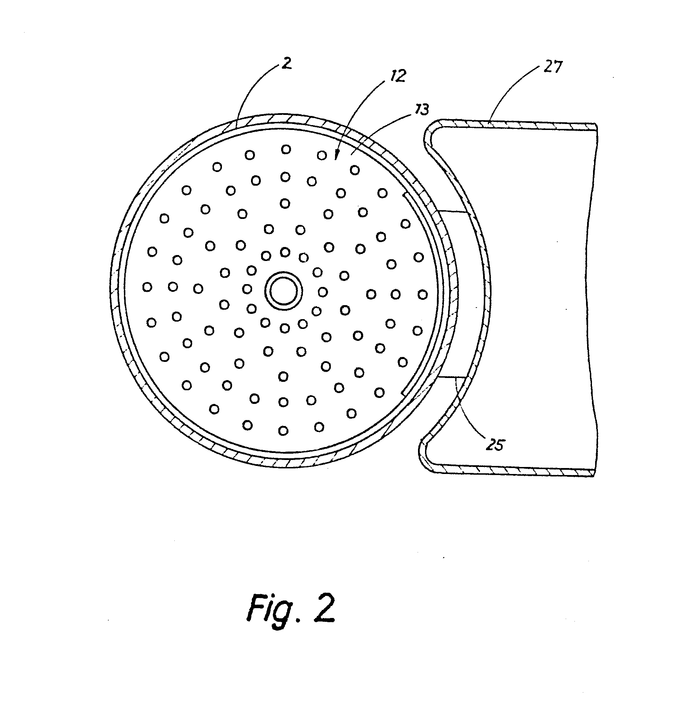

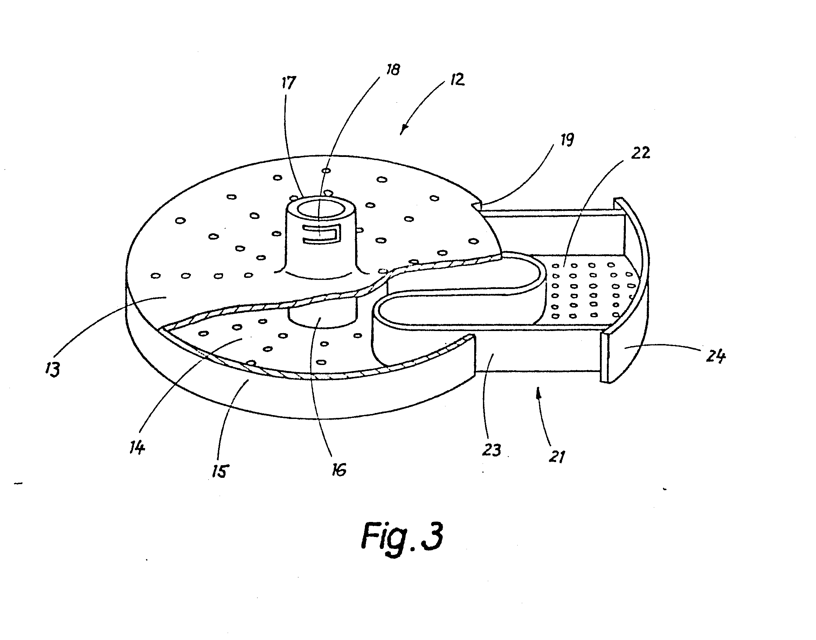

Auf dem Steigrohr 8 sitzt ein dosen- oder scheibenförmiger Brühgutbehälter 12, wie er in Fig. 2 in
der Draufsicht und in Fig. 3 in der Perspektive
veranschaulicht ist. Der kreiszylindrische Brühgutbehälter 12 weist einen Außendurchmesser auf,
der lediglich geringfügig kleiner als die lichte
Weite des Brühwasserbehälters 2 ist und enthält eine
perforierte Oberseite 13 sowie eine parallel und im
Abstand dazu verlaufende, ebenfalls perforierte
Unterseite 14, die beide randseitig durch eine umlaufende Seitenwand 15 miteinander verbunden sind,
wobei die perforierte Unterseite 14 einen Rost bildet.

Die Unterseite bzw. der Boden 14 des Brühgutbehälters 12 trägt koaxial einen einstückig angeformten Rohrabschnitt 16, der nach oben in Richtung auf die Oberseite 13 ragt und sich von unten her an die Oberseite 13 anlegt. Fluchtend mit dem Rohrabschnitt 16 ist an die Oberseite 13 ebenfalls ein Rohrabschnitt 17 angeformt, der nach oben aus dem Brühgutbehälter 12 hervorragt und in den seitlich eine in Umfangsrichtung weisende Blattfeder 18 eingeformt ist. Der Innendurchmesser der beiden Rohrabschnitte 16 und 17 ermöglicht die freie Verschiebbarkeit des Brühgutbehälters 12 auf dem Steigrohr 8, während die in Umfangsrichtung weisende eingeformte Blattfeder 18 den Brühgutbehälter 12 in der jeweiligen Stellung auf dem außenzylindrischen Steigrohr 8 arretiert bzw. festklemmt.

In der seitlichen Umfangsfläche 15 des Brühgutbehälters 12 ist eine viereckige Öffnung 19 vorgesehen, die vom Boden 14 bis zu der Oberseite 13 reicht und sich etwa über ein Viertel des Umfangs erstreckt. Die Öffnung 19 dient zum Einschieben einer gegabelten Schublade 21 mit perforiertem Boden 22, an den Seitenwände 23 einstückig angeformt sind. Im eingeschobenen Zustand umgreifen die gegabelten Enden der Schublade 21 den Rohrabschnitt 16, während sich eine die Schublade 21 nach außen abschließende Blende 24 an dem Boden 14 bzw. der Oberseite 13 nach oben und nach unten überstehend anlegt.; die Schublade 21 reicht hierbei bis an die Innenseite des gegenüberliegenden Innenwandabschnitts der Seitenwand 15 heran und dient der Aufnahme des Brühgutes, weshalb die Höhe der Seitenwand 23, die den Boden 22 bis auf den Bereich der Blende 24 allseitig umgibt, dem lichten Abstand zwischen dem Boden 14 und der Oberseite 13 entspricht, so daß kein in die Schublade 21 eingefülltes Brühgut aufgrund der Brühwassereinwirkung aus der Schublade 21 herausgespült werden kann. Es ist deshalb auch die Lochweite der Perforation in der Oberseite 13, dem Boden 14 und dem Boden 22 an die Partikelgröße des jeweiligen Brühgutes angepaßt, derart, daß durch diese Perforationslöcher kein Brühgut in die Umgebung austreten kann. Lediglich zum Zwecke der übersichtlichen Darstellung sind in den Figuren die Perforationslöcher verhältnismäßig groß gezeigt.

Anstelle der gezeigten Perforation können auch in entsprechend größere Durchbrechungen des Bodens 14, der Oberseite 13 sowie des Bodens 22 der Schublade 21 Siebplatten eingeklebt oder eingespritzt werden, wie sie beispielsweise von sogenannten Dauerfiltern bei Haushaltskafffeemaschinen bekannt sind.

Auch ist es möglich, anstelle des fest geschlossenen Brühgutbehälters 12 mit der Schublade 21 einen Brühgutbehälter vorzusehen, der im Bereich seiner Seitenwand 15 dosenartig ineinandergreift und zum Zwecke des Füllens und Reinigens im Bereich seiner Seitenwand 15 in axialer Richtung zu öffnen ist und der dann dementsprechend keine Schublade 21 und auch nicht die zugehörige Öffnung 19 enthält. In diesem Falle wird dann zweckmäßigerweise der Rohrabschnitt 16 mit der Feder 18 versehen, damit sich nicht etwa das Bodenteil von dem auf dem Steigrohr 8 arretierten Deckelteil löst.

Der Brühgutbehälter 2 steht lösbar mit seinem Boden 3 auf einem horizontal verlaufenden Träger 25 eines der Erzeugung von Brühwasser dienenden Gerätes 26, auf dessen im Seitenriß etwa L-förmigem Gehäuse 27 ein nach oben offener Frischwasserbehälter 28 befestigt ist. Der Frischwasserbehälter 28 enthält an der tiefsten Stelle seines Bodens 29 einen Auslauf 31, der an die Einlaufseite eines elektrischen Durchlauferhitzers 32 angeschlossen ist, dessen Auslaufseite 33 über ein Rohr 34 mit einem Überlaufrohr 35 strömungsmäßig verbunden ist, das über dem Rohrstutzen 11 des Steigrohrs 8 mündet. Damit das in dem Rohr 34 aufsteigende heiße Wasser nicht durch das in dem Frischwasserbehälter 28 enthaltene kalte Wasser gekühlt wird, verläuft das Rohr 34 wärmeisoliert in einem Mantelrohr 36, das einstückig an den Boden 29 angeformt nach oben hochragt und der mechanischen Halterung des Überlaufrohrs 35 dient, an das ein nach unten weisender Rohrabschnitt 37 angeformt ist, der das Überlaufrohr 35 mit dem Mantelrohr 36 mechanisch verbindet, während das Rohr 34 lediglich abgedichtet in das Überlaufrohr 35 eingeführt ist, so daß die Verbindung zwischen dem Rohr 34 und dem Überlaufrohr 35 keine mechanische Tragfunktion zu übernehmen braucht.

Auf dem L-förmig vorstehenden Teil 38 des Gehäuses 27 befindet sich unterhalb des Trägers 25 ein mit einem Deckel 39 versehenes Auffanggefäß 41, das mit seinem planen Boden 42 auf einer in dem Gerät 26 vorgesehenen elektrischen Heizplatte 43 steht.

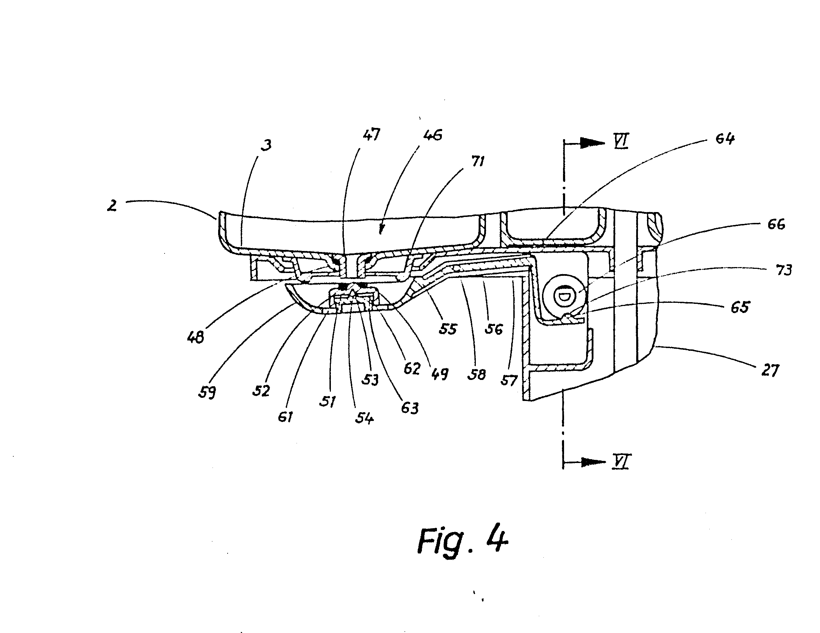

Der Deckel 39 ist bei 44 trichterförmig vertieft und enthält eine mittige, am Grund der Vertiefung 44 liegende Öffnung 45, die mit einem in dem Boden 3 des Behälters 2 vorgesehenen Ventil 46 fluchtet, das anhand von Fig. 4, in der es im geöffneten Zustand veranschaulicht ist, im einzelnen beschrieben ist.

Das Ventil 46 weist einen rohrförmigen Ventilsitz 47 auf, der in eine Öffnung an der tiefsten Stelle des kegeligen Bodens 3 nach unten ragend eingesetzt ist, und zwar so, daß der Ventilsitz 47 koaxial zu dem Brühwasserbehälter 2 verläuft. Die Abdichtung des an seiner Unterseite planen Ventilsitzes 47 erfolgt mittels eines zwischen dem Boden 3 und dem Ventilsitz 47 eingelegten Rundschnurrings 48. Das mit dem Ventilsitz 47 zusammenwirkende Ventilverschlußglied 49 hat die Gestalt einer nach unten offenen Kappe und trägt auf seiner Oberseite eine in eine kreisförmige Rille 51 eingeklebte Dichtung 52, die ebenfalls aus einem Rundschnurring besteht und sich dichtend an die plane Unterseite des Ventilsitzes 47 anlegen kann. Konzentrisch zu der Rille 51 ist in der Unterseite des Ventilverschlußgliedes 49 eine Vertiefung 53 vorgesehen, in die ein kegelförmiger Fortsatz 54 eingreift, und zwar so, daß das Ventilverschlußglied 49 auf dem kegeligen Fortsatz 54 eine Taumelbewegung ausführen kann, um sich entsprechend der Lage des Ventilsitzes 47 ausrichten zu können.

Der kegelige Fortsatz 54 sitzt auf einem Arm 55 eines zweiarmigen Hebels 56, der in einer entsprechend radial verlaufenden Ausnehmung 57 des Trägers 25 bei 58 schwenkbar gelagert ist. Um ein seitliches Wegspritzen der aus dem Ventilsitz 57 bei geöffnetem Ventil 46 austretenden Flüssigkeit zu vermeiden, ist der Arm 55 bei 59 becherartig ausgebildet, während der kegelige Fortsatz oder Zapfen 54, auf dem das Ventilverschlußglied 59 sitzt, im Bereich des Bodens des mit Öffnungen 61 versehenen Bechers 59 angeformt ist, wobei der Becher 59 eine Tiefe aufweist, die größer ist als die axiale Erstreckung des Ventilverschlußgliedes 49. Dieses ist unverlierbar über dem Boden des Bechers 59 mittels Hinterschneidungen 62 gehaltert, die entsprechende Fortsätze 63 im Boden des Bechers 59 hintergreifen, ohne die Ausgleichsbewegung des Ventilverschlußgliedes 49 auf dem Zapfen 54 zu behindern.

Der dem Arm 55 bezüglich der Schwenkachse 58 gegenüberliegende Arm 64 des Hebels 56 führt in das Gehäuse 27 und trägt einen parallel zur Schwenkachse 58 verlaufenden Wulst 65, der eine Nockenscheibe 66 eines Zeitschalters 67 abtastet. Der Zeitschalter 67 enthält ein von Kurzzeitweckern her bekanntes Federuhrwerk, das über eine die Nockenscheibe 66 drehfest tragende Welle 68 aufgezogen werden kann, die sich nach dem Loslassen in der entgegengesetzten Richtung allmählich bis zur Ausgangsstellung zurückdreht. Zum Aufziehen des Zeitschalters 67 sitzt auf der Aufzugswelle 68 ein Aufzugsknopf 69, der aus dem Gehäuse 27 herausführt.

Um auch bei nachlässiger Handhabung ein hinreichendes Zentrieren des Brühwasserbehälters 2 auf dem Träger 25 zu gewährleisten, ist auf der Unterseite des Bodens 3 ein zu dem Ventilsitz 47 konzentrischer, nach unten vorstehender ringförmiger Fortsatz 71 befestigt, der mit verhältnismäßig großem Spiel in eine in dem Träger 25 vorgesehene Öffnung 72 mit abgeschrägten Seitenflanken paßt. Diese Öffnung 72 umgibt bei aufgesetztem Brühwasserbehälter 2 konzentrisch den Fortsatz 71 und damit den Ventil-

sitz 47. Eine weitere Zentrierung wird dadurch erreicht, daß der Träger 25 auf seiner Oberseite konzentrisch zu der Öffnung 72 kegelstumpfförmig konkav ausgebildet ist, und zwar so, daß der Boden 3 satt auf dem Träger 25 aufliegen kann.

Falls das Eigengewicht des leeren Brühwasserbehälters 2 nicht ausreicht, um ihn kippfrei auf dem Träger 25 zu halten, wenn durch die verdrehte Nockenscheibe 66 der Hebel 56 im Uhrzeigersinne verschwenkt wird, und damit das Ventilverschlußglied 49 an den Ventilsitz 47 angepreßt wird, kann das Überlaufrohr 35 zur Arretierung des Brühwasserbehälters 2 verwendet werden, und zwar indem die Bemessung insgesamt so gewählt wird, daß die Unterseite des Überlaufrohres 35, das auf dem Mantelrohr 36 kippfest verankert ist, sich auf den Rand des Rohrstutzens 11 auflegt und damit über den Deckel 7 den Brühwasserbehälter 2 auf den Träger 25 niederdrückt.

Die Arbeits- und Funktionsweise der insoweit beschriebenen Vorrichtung 1 ist wie folgt:

Zunächst werden auf den Boden 22 der aus dem Brühgutbehälter 12 herausgezogenen Schublade 21 die das Brühgut bildenden Teeblätter gleichmäßig verteilt aufgegeben. Dann wird die Schublade 21 in den Brühgutbehälter 12 eingeschoben, der der jeweiligen Brühwassermenge und der Brühzeit entsprechend auf der zugehörigen Höhe auf dem Steigrohr 8 positioniert ist. Nunmehr wird der Deckel 7 mit dem auf dem Steigrohr 8 entsprechend arretierten Brühgutbehälter 12 auf den Brühwasserbehälter 2 aufgesetzt und der geschlossene Brühwasserbehälter 2 auf dem Träger 25 angeordnet. Jetzt wird das auf dem Mantelrohr 36 auf-

gesteckte Überlaufrohr 35 über den Einlaufstutzen 11 geschwenkt, wobei die Unterseite des Überlaufrohres 35 mit dem Einlaßstutzen 11 in Eingriff kommt und den Brühwasserbehälter 2 auf dem Träger 25 festdrückt. Jetzt kann, nachdem die entsprechende Frischwassermenge in den Frischwasserbehälter 28 eingefüllt und der Zeitschalter 67 mittels des Betätigungsknopfes 69 auf die jeweilige Brühzeit eingestellt wurde, der nicht weiter gezeigte elektrische Schalter betätigt werden, mit dem der elektrische Strom für den Durchlauferhitzer 32 eingeschaltet wird. Durch das Betätigen des Drehknopfes 69 wird die Nockenscheibe 66 aus der in Fig. 4 gezeigten Stellung in die in Fig. 1 gezeigte Stellung verdreht, wodurch die in der Nockenscheibe 66 enthaltene Kerbe 73 von dem Wulst 65 heruntergleitet, der nunmehr auf der radial weiter außen liegenden Außenumfangsfläche der Nockenscheibe 66 zu liegen kommt, wobei er beim Herausgleiten aus der Kerbe 73 dem Hebel 56 eine Schwenkbewegung im Uhrzeigersinne erteilt, die dazu führt, daß sich das Ventilverschlußglied 49 dichtend an den Ventilsitz 47 anlegt, womit der Brühwasserbehälter 2 nach unten verschlossen wird. Da, wie oben ausgeführt, gleichzeitig mit der Verdrehung der Nockenscheibe 66 auch das Federuhrwerk aufgezogen wird, beginnt sich unmittelbar nach dem Loslassen des Drehknopfes 69 die Aufzugswelle samt Nockenscheibe 66 im Gegenuhrzeigersinne in Richtung eines Pfeiles 72 zu drehen.

Wegen des gleichzeitig mit dem Loslassen des Drehknopfes 69 eingeschalteten Durchlauferhitzers 32 wird nunmehr in bekannter Weise von dem Durchlauferhitzer 32 Brühwasser erzeugt, das über das Rohr 34

in das Überlaufrohr 35 aufsteigt, von wo es in das Steigrohr 8 einläuft. Durch das Steigrohr 8 hindurch gelangt das heiße Brühwasser in den Raum unterhalb des Brühgutbehälters 12, d.h. in den Raum zwischen dem Brühgutbehälter 12 und dem Boden 3 des Brühwasserbehälters 2. Im weiteren Brühverlauf, bei dem der Durchlauferhitzer 32 kontinuierlich aus dem aus dem Frischwasserbehälter 28 nachlaufenden Kaltwasser Brühwasser erzeugt, steigt das Brühwasser über dem Boden 3 des Brühwasserbehälters 2 allmählich an und dringt hierbei von unten her in den Brühgutbehälter 12 ein, wobei die Kontaktzeit zwischen dem Brühgut und dem Brühwasser erst beginnt, nachdem eine vorbestimmte Brühwassermenge in den Brühwasserbehälter 2 gefördert wurde. Weil der Brühgutbehälter 12 relativ flach ausgebildet ist, kommt das gesamte darin flächig ausgebreitete Brühgut nahezu gleichzeitig in Kontakt mit dem heißen Brühwasser, so daß die Kontakt- oder Brühzeit für das gesamte Brühgut nahezu gleichzeitig beginnt.

Im weiteren Verlauf der Brühwassererzeugung steigt der Wasserspiegel in dem Brühwasserbehälter 2 immer weiter an, und nach einer verhältnismäßig kurzen Zeit, die der Höhe des Brühgutbehälters 12 entspricht, ist dieser vollständig in Brühwasser untergetaucht. Wenn schließlich das gesamte Frischwasser aus dem Frischwasserbehälter 28 verbraucht ist, hat der Wasserspiegel in dem Brühwasserbehälter 2 seinen Höchststand erreicht und der Vorgang der Brühwassererzeugung ist abgeschlossen.

- 18 -

Da bei gegebener elektrischer Leistung des Durchlauferhitzers 32 die Zeit zur Erzeugung des Brühwassers
von dessen Menge abhängig ist, ist seit dem Einschalten des Durchlauferhitzers 32 eine der Wassermenge
entsprechende Zeit vergangen, während der sich die
Nockenscheibe 66 des Zeitschalters 67 rückwärts in
Richtung auf die Ausgangsstellung entsprechend Fig. 4
zurückgedreht hat. Wenn schließlich die Ausgangsstellung der Nockenscheibe 66 gemäß Fig. 4 erreicht ist,
ist die gewünschte Kontakt- oder Brühzeit verstrichen,
seitdem erstmals von unten her ansteigendes Brühwasser mit dem Brühgut in dem Brühgutbehälter 12 in
Berührung gekommen ist. In der Ausgangsstellung der
Nockenscheibe 66 fällt der Wulst 65 wieder in die
Kerbe 73 ein, wodurch der Hebel 56 aufgrund seiner
Massenverteilung im Gegenuhrzeigersinne herumschwenkt
und das Ventilverschlußglied 49 von dem Ventilsitz
47 freikommt. Jetzt kann das fertige Aufgußgetränk
aus dem Brühwasserbehälter 2 über das geöffnete
Ventil 46 in das darunter angeordnete Auffanggefäß
41 laufen, das von der elektrisch beheizten Warmhalteplatte 43 vorgewärmt ist. Dieses Ablaufen des
fertigen Aufgußgetränkes geht sehr rasch von statten,
insbesondere dann, wenn in dem Deckel 7 entsprechende
Belüftungslöcher vorgesehen sind, so daß aufgrund
der Ablaufzeit des Aufgußgetränkes keine nennenswerte
Verlängerung der Brühzeit zustandekommt.

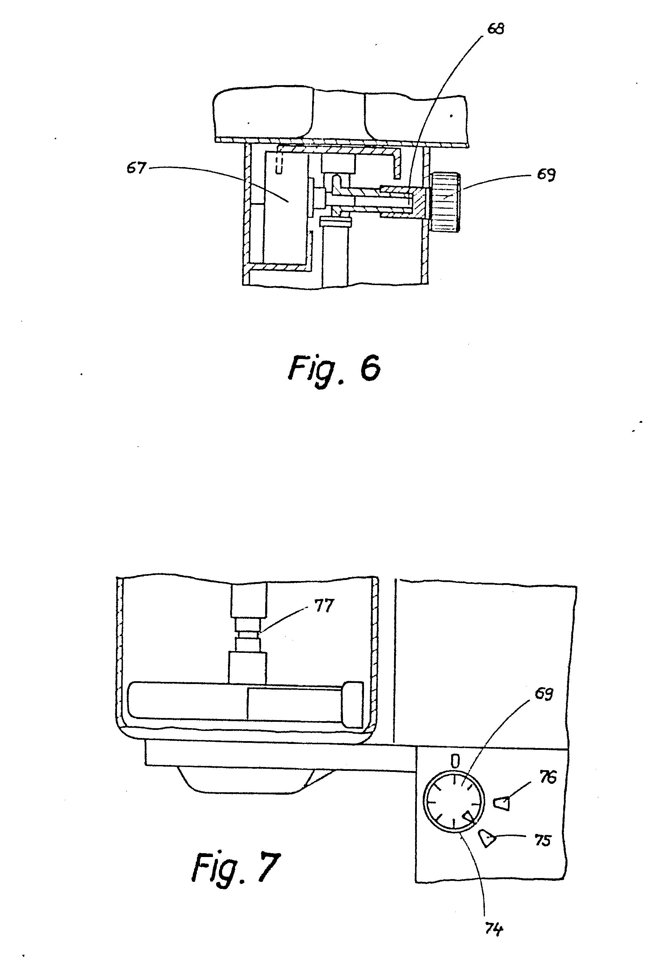

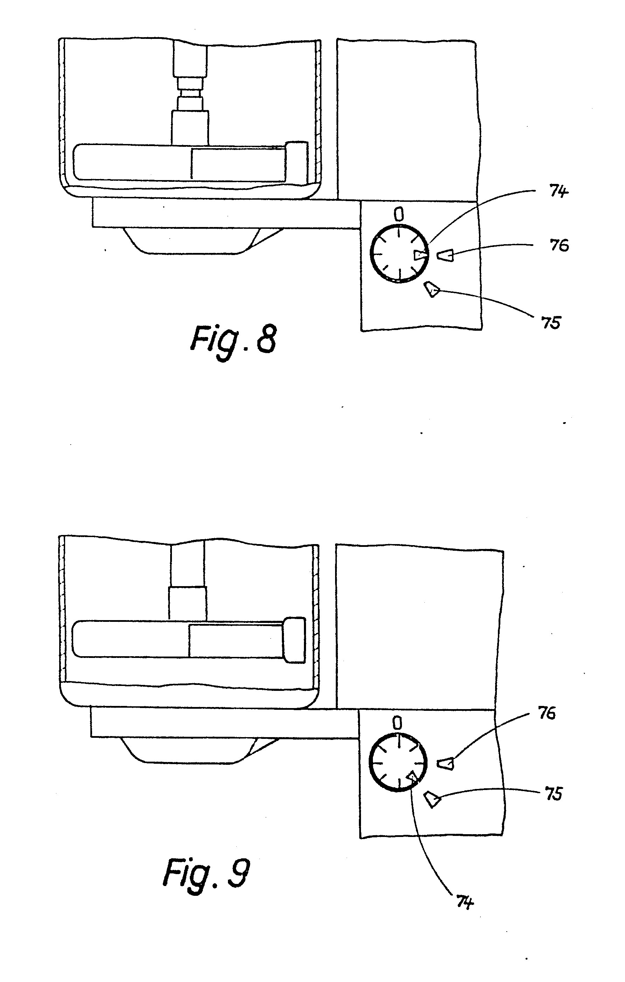

Die unterschiedlichen Einstellungen sind in den Fig. 7
bis 9 veranschaulicht. Wenn ein Teeaufgußgetränk hergestellt werden soll, bei dem der Tee etwa fünf Minuten "ziehen" soll, so daß ein beruhigender Tee erhalten wird, befindet sich der Brühgutbehälter 12 in
seiner untersten Stellung auf dem Steigrohr 8, wie
dies Fig. 7 zeigt. Der Zeitschalter 67 wird dann mittels seines Drehknopfes 69 so weit aufgezogen, bis sich seine Einstellmarke 74 gegenüber der Fünf-Minuten-Marke 75 befindet. Die Ablaufzeit des Zeitschalters 67 stellt dabei für eine Brühwassermenge, die zwei bis acht Tassen entspricht, sicher, daß unabhängig von der in diesem Intervall liegenden Brühwassermenge die Kontaktzeit fünf Minunten beträgt, ehe das Ventil 47 geöffnet wird. Soll hingegen ein Drei-Minuten-Tee erzeugt werden, dann ist, wie die Fig. 8 und 9 zeigen, die Einstellung des Brühgutbehälter 12 von der Brühwassermenge abhängig. Im Bereich von zwei bis vier Tassen wird der Brühgutbehälter 12, wie im Falle von Fig. 7 beim Fünf-Minuten-Tee, in seiner unteren Position auf dem Steigrohr 8 gehaltert. Der Drehknopf 69 des Zeitschalters 67 wird nun nur so weit gedreht, bis seine Einstellmarke 74 gegenüber der Drei-Minuten-Marke 76 zu liegen kommt. Bei dieser Einstellkombination ist bei der größten Brühwassermenge entsprechend vier Tassen gerade das letzte heiße Brühwasser erzeugt worden, kurz bevor der Zeitschalter 67 in seine Anfangsstellung zurückkehrt und das Ventil 46 öffnet.

Wenn hingegen fünf bis acht Tassen Tee erzeugt werden sollen, die lediglich drei Minuten ziehen sollen, wird der Brühgutbehälter 12 in eine vorbestimmte obere Stellung gebracht, wie sie Fig. 9 zeigt, denn bei dieser Wassermenge ist die Zeit zur Erzeugung des Brühwassers länger als die gewünschte Kontaktzeit von drei Minuten, weshalb gegenüber von Fig. 8 erst die etwa vier Tassen entsprechende Brühwassermenge in den Brühwasserbehälter 2 geschafft werden müssen, ehe ein Kontakt zwischen dem in dem Brühgutbehälter 12 befindlichen Brühgut und dem heißen Brühwasser zustandekommen darf. Entsprechend der nunmehr längeren Zeit zur Erzeugung des heißen Brühwassers wird auch der Drehknopf 69 so weit gedreht, bis sich seine Einstellmarke 74 gegenüber der Fünf-Minuten-Marke 75 befindet.

Um die Bedienung zu erleichtern, ist das Steigrohr 8 mit zwei in Umfangsrichtung umlaufenden Ringnuten 77 versehen, von denen in den Figuren lediglich die obere sichtbar ist und in die die Feder 18 mit einem entsprechenden Fortsatz einrasten kann; die Lage der Ringnuten 77 entspricht dabei den in den Fig. 7 bis 9 gezeigten Stellungen des Brühgutbehälters 12.

Anstelle des geschlossenen, jedoch wasserdurchlässigen Brühgutbehälters 12 kann auch ein einfacher Rost verwendet werden, der abdichtend bis an die Innenwand des Brühwasserbehälters 2 heranreicht und ähnlich wie der Brühgutbehälter 12 konzentrisch einen Rohrabschnitt aufweist, mit dem er auf dem Steigrohr 8 längsverschieblich gelagert ist. Die Maschenweite eines solchen Rostes ist wie bei dem Brühgutbehälter 12 auf das jeweils verwendete Brühgut abgestimmt, damit das auf den Rost aufzugebende Brühgut nicht nach unten in den Brühwasserbehälter hindurchfällt oder von dem ablaufenden Aufgußgetränk mitgerissen wird; dementsprechend ist auch die Abdichtung eines solchen Rostes gegenüber dem Steigrohr 8 bzw. der Innenwand des Brühwasserbehälters 2 ausgelegt.

Ob der an sich sehr einfache Rost oder der Brühgutbehälter 12 verwendet wird, richtet sich nach dem Brühgut und danach, ob es gewünscht ist, daß sich das Brühgut im Raum über dem Rost frei verteilen kann.

- 21 -

Bei dem in Fig. 3 veranschaulichten Brühgutbehälter
12 wird ein Überlaufen des Steigrohres 8 dadurch
verhindert, daß die Schublade 21 sich lediglich über
einen Teil der Fläche des Bodens 14 erstreckt, somit
das Brühwasser seitlich neben der eingesetzten Schublade 21 ungehindert aufsteigen kann, falls die Schublade 21 zu voll gefüllt wurde.

I

– 22 –
Patentansprüche

1. Verfahren zum Herstellen eines Aufgusses von Tee oder Kaffee, bei dem zunächst eine vorbestimmte Menge Brühgut bildende Teeblätter oder gemahlene Kaffeebohnen in ein Brühgefäß eingebracht, dann Brühwasser in das Brühgefäß eingeleitet und nach Ablauf einer vorbestimmten Zeitspanne der entstandene Aufguß von dem Brühgut getrennt wird, dadurch gekennzeichnet, daß das Brühgut in einem vorbestimmten Abstand über dem Boden des Brühgefäßes flächenförmig verteilt angeordnet und das Brühwasser in den Raum unterhalb des Brühgutes so lange eingefüllt wird, bis das Brühgut vollständig in dem von unten her ansteigenden Brühwasser untergetaucht ist.

2. Verfahren nach Anspruch 1, dadurch gekennzeichnet, daß der Aufguß aus dem Raum unterhalb des Brühgutes aus dem Brühgefäß abgezogen oder abgelassen wird.

3. Verfahren nach Anspruch 1, dadurch gekennzeichnet, daß das Brühgut flächig unterstützt und gegen Aufschwimmen gesichert ist.

- 23 -

4. Verfahren nach Anspruch 1, dadurch gekennzeichnet, daß der Abstand des Brühguts von dem Boden des Brühgefäßes an die Anstiegsgeschwindigkeit des Brühwassers in dem Brühbehälter sowie die Menge des Brühwassers angepaßt wird, derart, daß unabhängig von der Anstiegsgeschwindigkeit und der Menge des Brühwassers eine im wesentlichen konstante Einwirkzeit des Brühwassers auf das Brühgut zustandekommt.

5. Vorrichtung zum Herstellen eines Aufgusses nach Anspruch 1, mit einem das Brühwasser aufnehmenden Behälter sowie einer Einrichtung zum Aufnehmen des Brühgutes, dadurch gekennzeichnet, daß die Einrichtung zur Aufnahme des Brühgutes von einem in dem Brühwasserbehälter (2) vorgesehenen Rost (12, 14) gebildet ist und daß sie eine in dem Raum unterhalb des Rostes (12, 14) in den Brühwasserbehälter (2) mündende Leitung (8) für die Zufuhr des Brühwassers aufweist.

6. Vorrichtung nach Anspruch 5, dadurch gekennzeichnet, daß die Leitung von einem durch den Rost (12, 14) hindurch- bzw. daran vorbeiführenden Steigrohr (8) gebildet ist, das gegen den Rost (12, 14) abgedichtet ist.

7. Vorrichtung nach Anspruch 5, dadurch gekennzeichnet, daß der Rost (12, 14) in dem Brühwasserbehälter (2) höhenverstellbar angeordnet ist.

8. Vorrichtung nach Anspruch 5, dadurch gekennzeichnet, daß der Rost (12, 14) allseitig bis an die Innenwand des Brühwasserbehälters (2) im wesentlichen gegen den Durchtritt von Brühgut abgedichtet heranreicht.

9. Vorrichtung nach Anspruch 6, dadurch gekennzeichnet, daß das Steigrohr (8) im wesentlichen gegen den Durchtritt von Brühgut abgedichtet durch den Rost (12, 14) hindurchgeführt ist.

10. Vorrichtung nach Anspruch 6, dadurch gekennzeichnet, daß der Brühwasserbehälter (2) einen abnehmbaren Deckel (7) aufweist, mit dem das Steigrohr (8) verbunden ist.

11. Vorrichtung nach Anspruch 6, dadurch gekennzeichnet, daß der Rost (12, 14) an dem Steigrohr (8) höhenverstellbar gehalten ist.

12. Vorrichtung nach Anspruch 5, dadurch gekennzeichnet, daß der Rost den Boden (14) eines das Brühgut aufnehmenden flachen Brühgutbehälters (12) mit zumindest bereichsweise wasserdurchlässiger Oberseite (13) bildet.

13. Vorrichtung nach Anspruch 12, dadurch gekennzeichnet, daß der Brühgutbehälter (12) eine verschließbare Einfüllöffnung aufweist.

14. Vorrichtung nach Anspruch 12, dadurch gekennzeichnet, daß der Brühgutbehälter (12) eine seitliche Öffnung (19) enthält, in der eine in das Innere des Brühgutbehälters (12) führende herausziehbare Schublade (21) mit wasserdurchlässigem Boden (22) für das Brühgut sitzt.

15. Vorrichtung nach Anspruch 5, dadurch gekennzeichnet, daß der Brühwasserbehälter (2) einen in den Raum unterhalb des Rostes (12, 14) mündenden Auslaß (47) aufweist, der durch ein Ventil (46) wahlweise absperrbar ist.

16. Vorrichtung nach Anspruch 15, dadurch gekennzeichnet, daß dem Ventil (46) ein Zeitschalter (67) zugeordnet ist, durch den nach Ablauf einer gegebenenfalls einstellbaren Zeitspanne das Ventil (46) im Öffnungssinne ansteuerbar ist.

17. Vorrichtung nach einem oder mehreren der Ansprüche 5 bis 16, dadurch gekennzeichnet, daß der Brühwasserbehälter (2) lösbar in einem Gerät (26) zur Brühwassererzeugung angeordnet ist, das in einem Gehäuse (27) einen Kaltwasserbehälter (28) sowie einen an einen Auslauf (29) des Kaltwasserbehälters (28) angeschlossenen Durchlauferhitzer (32) enthält, dessen Ausgangsseite (33) an ein über dem Steigrohr (8) mündendes Überlaufrohr (35) angeschlossen ist, und daß das Gerät (26) zur Brühwassererzeugung ein entnehmbares Auffanggefäß (41) zur Aufnahme des fertigen Aufgusses enthält, das sich unterhalb des Brühwasserbehälters (2) befindet.

18. Vorrichtung nach Anspruch 17, dadurch gekennzeichnet, daß der Brühwasserbehälter (2) auf einem Träger (25) des Gerätes (26) zur Brühwassererzeugung aufgesetzt ist, unter dem sich das Auffanggefäß (41) befindet.

19. Vorrichtung nach den Ansprüchen 15 und 17, dadurch gekennzeichnet, daß das Ventilverschlußglied (49) für das Ventil (46) des Brühwasserbehälters (2) in dem Träger (25) für den Brühwasserbehälter (2) gelagert und mit dem in dem Gerät (26) zur Brühwassererzeugung angeordneten Zeitschalter (47) zusammenwirkt.

20. Vorrichtung nach Anspruch 19, dadurch gekennzeichnet, daß das Ventilverschlußglied (49) auf einem Arm (55) eines in dem Träger (25) gelagerten zweiarmigen Hebels (56) sitzt, dessen anderer Arm (64) eine die Bewegung des Hebels (56) steuernde Nockenbahn (66) des Zeitschalters (67) abfühlt.

21. Vorrichtung nach Anspruch 17, dadurch gekennzeichnet, daß der Brühwasserbehälter (2) lösbar auf dem Träger (25) arretierbar ist.

22. Vorrichtung nach Anspruch 21, dadurch gekennzeichnet, daß der Brühwasserbehälter (2) durch das mit dem Deckel (7) in Eingriff stehende Überlaufrohr (35) arretierbar ist, das um eine vertikale Drehachse schwenkbar an dem Gehäuse (27) des Gerätes (26) zur Brühwassererzeugung gehaltert ist.

23. Vorrichtung nach Anspruch 6, dadurch gekennzeichnet, daß das Steigrohr (8) koaxial in dem Brühwasserbehälter (2) verlaufend angeordnet ist.

0131935

Fig. 1

Fig. 2

Fig. 3

Fig. 4

Fig. 5

0131935

Fig. 6

Fig. 7

Fig. 8

74
76
75

Fig. 9

76
75
74

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl. 3) |
|---|---|---|---|
| Y | DE-U-8 127 268 (SCHLENKER-MAIER) * Seite 5, Zeile 22 - Seite 8, Zeile 19; Figuren 1,2 * | 1 | A 47 J 31/057 A 47 J 31/20 |
| A | | 2,6,15 ,16,17 ,20,23 | |
| | --- | | |
| Y | US-A-1 552 565 (MORTON et al.) * Insgesamt * | 1 | |
| A | | 2,3,8, 12,13 | |
| X | | 5 | |
| | --- | | RECHERCHIERTE SACHGEBIETE (Int. Cl. 3) |
| X | CH-A- 369 879 (ROWENTA) * Seite 2, Zeilen 50-73; Figur 1 * | 1,5 | A 47 J |
| A | | 2,3,8, 12,13 | |
| | --- | | |
| A | GB-A- 6 989 (BETJEMANN)(A.D. 1914) * Insgesamt * | 1,5,6, 8 | |
| | --- -/- | | |

Der vorliegende Recherchenbericht wurde für alle Patentansprüche erstellt.

| Recherchenort DEN HAAG | Abschlußdatum der Recherche 11-10-1984 | Prüfer SCHARTZ J. |
|---|---|---|

Europäisches
Patentamt

**EUROPÄISCHER RECHERCHENBERICHT**

0131935
Nummer der Anmeldung

EP 84 10 8253

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl. ³) |
|---|---|---|---|
| A | DE-C- 187 804 (LEHNERT)<br>* Insgesamt *<br><br>--- | 1 | |
| A | DE-A-2 407 221 (BRAUN AG.)<br>* Seite 1, letzter Absatz; Figur 5 *<br><br>----- | 4,7,11 | |
| | | | RECHERCHIERTE SACHGEBIETE (Int. Cl. ³) |

Der vorliegende Recherchenbericht wurde für alle Patentansprüche erstellt.

| Recherchenort<br>DEN HAAG | Abschlußdatum der Recherche<br>11-10-1984 | Prüfer<br>SCHARTZ J. |
|---|---|---|

EPA Form 1503 03 82

KATEGORIE DER GENANNTEN DOKUMENTEN
X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
  nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument